# FASCICULE DE BREVET EUROPEEN

(11) **EP 2 528 762 B1**
(45) Date de publication et mention de la délivrance du brevet: **12.02.2014**
(21) Numéro de dépôt: 10809313.9
(22) Date de dépôt: 23.12.2010
(51) Int. Cl.: B60K 6/46, B60K 6/48, B60W 20/00, B60K 6/52

(54) **PROCEDE DE MOTRICITE PREVENTIVE POUR VEHICULE HYBRIDE**
VERFAHREN ZUR BEREITSTELLUNG EINES ANTRIEBSSYSTEMS FÜR EIN HYBRIDFAHRZEUG
METHOD FOR PROVIDING A PREVENTIVE DRIVE SYSTEM FOR A HYBRID VEHICLE

(30) Priorité: 28.01.2010 FR 1050581
(43) Date de publication de la demande: 05.12.2012
(73) Titulaire: Peugeot Citroën Automobiles SA, 78140 Vélizy-Villacoublay (FR)
(72) Inventeur: HABBANI, Ridouane, F-92110 Clichy (FR)
(74) Mandataire: Rosenberg, Muriel Sylvie
(86) Numéro de dépôt international: PCT/FR2010/052904
(87) Numéro de publication internationale: WO 2011/092393

(56) Documents cités:
- EP-A2- 2 050 642
- US-A1- 2002 032 512
- US-A1- 2003 037 977
- US-A1- 2008 071 451

## Description

L'invention concerne un procédé de motricité « préventive » pour véhicule hybride. On parle de motricité préventive car l'invention permet d'appliquer du couple sur le train avant et le train arrière avant même de rencontrer du glissement sur une des roues du véhicule. L'invention permet notamment de limiter le glissement des roues en phase d'accélération.

L'invention trouve une application particulièrement avantageuse dans le domaine des véhicules hybrides comportant un train avant et un train arrière tractés mécaniquement indépendamment l'un de l'autre.

On connaît des véhicules hybrides comportant un moteur thermique assurant la traction du train avant, ce moteur étant associé mécaniquement à une machine électrique avant. Cette machine électrique de type alterno/démarreur permet notamment de recharger les batteries du véhicule et démarrer le moteur thermique. Dans certaines situations de vie, cette machine peut même participer à la traction du véhicule.

Ces véhicules comportent également une machine électrique assurant la traction du train arrière via un réducteur et un dispositif d'accouplement par exemple de type crabot. Par opposition aux véhicules 4x4 traditionnels, la traction du train avant et la traction du train arrière sont indépendantes mécaniquement l'une de l'autre.

La machine électrique avant et la machine électrique arrière sont reliées à une batterie haute tension par l'intermédiaire d'un réseau électrique. Cette batterie haute tension est en relation avec un réseau de bord basse tension par l'intermédiaire d'un convertisseur continu/continu.

Un système de régulation de freinage est généralement installé sur les roues du véhicule, ce système permettant d'éviter le blocage des roues et le cas échéant de rétablir une trajectoire du véhicule.

Lors d'une phase de vie normale, un couple de consigne global est calculé en fonction notamment de l'enfoncement de la pédale d'accélérateur et de la vitesse du véhicule. Ce couple de consigne global est ensuite réparti en un couple de consigne appliqué sur le train avant et un couple de consigne appliqué sur le train arrière par le calculateur moteur.

US 2008/0071451 décrit un procédé de répartition de couple entre le train avant et le train arrière d'un véhicule hybride comprenant :
- un moteur thermique destiné à assurer la traction d'un des trains du véhicule,
- une machine électrique destinée à assurer la traction de l'autre train du véhicule, cette machine électrique étant en relation avec une batterie haute tension,
- le calcul d'une répartition du couple demandé par le conducteur entre le train avant et le train arrière en fonction de la vitesse du véhicule et de l'accélération latérale.

Conformément à l'invention, la répartition du couple demandé entre le train avant et le train arrière va dépendre de la vitesse du véhicule, de l'accélération latérale, et de l'état de charge de la batterie, ce qui permet de maîtriser la répartition suivant l'énergie disponible dans la batterie.

L'invention concerne donc un procédé de répartition de couple entre le train avant et le train arrière d'un véhicule hybride comprenant :
- un moteur thermique destiné à assurer la traction d'un des trains du véhicule,
- une machine électrique destinée à assurer la traction de l'autre train du véhicule, cette machine électrique étant en relation avec une batterie haute tension,
   caractérisé en ce que
- on calcule une répartition du couple demandé par le conducteur entre le train avant et le train arrière en fonction de la vitesse du véhicule, de l'accélération latérale du véhicule et du niveau de charge de la batterie haute tension et , pour calculer la répartition, il comporte les étapes suivantes :
- calculer une première répartition du couple demandé entre le train avant et le train arrière en fonction de la vitesse du véhicule,
- calculer une deuxième répartition du couple demandé entre le train avant et le train arrière en fonction de l'accélération latérale du véhicule,
- calculer une troisième répartition du couple demandé entre le train avant et le train arrière en fonction de l'état de charge de la batterie, et
- pondérer les répartitions calculées pour déterminer la répartition du couple demandé à appliquer entre le train avant et le train arrière.

Selon une mise en oeuvre, la première répartition est calculée à partir d'une cartographie dans laquelle plus la vitesse du véhicule augmente plus la portion du couple demandé appliqué sur le train associé au moteur thermique augmente.

Selon une mise en oeuvre, la cartographie est formée par des segments ayant des pentes variant en fonction de la plage de vitesses considérée.

Selon une mise en oeuvre, la deuxième répartition de couple est calculée à partir d'une cartographie dans laquelle plus l'accélération latérale augmente plus la portion du couple demandé appliqué sur le train associé au moteur thermique diminue.

Selon une mise en oeuvre, la cartographie est formée par des segments ayant des pentes variant en fonction de la plage d'accélération latérale considérée.

Selon une mise en oeuvre, la troisième répartition de couple est calculée à partir d'une cartographie dans laquelle plus le niveau de charge de la batterie augmente plus la portion du couple demandé appliqué sur le train associé au moteur thermique augmente.

Selon une mise en oeuvre, la cartographie est formée par des segments ayant des pentes variant en fonction de la plage de niveau de charge considérée.

Selon une mise en oeuvre, la fonction de pondération est adaptée en fonction du mode de conduite choisi par le conducteur et/ou la situation de vie du véhicule.

Selon une mise en oeuvre, les pentes sont suffisamment faibles pour ne pas perturber la régulation de freinage lorsqu'un système de régulation de freinage est activé.

L'invention sera mieux comprise à la lecture de la description qui suit et à l'examen des figures qui l'accompagnent. Ces figures ne sont données qu'à titre illustratif mais nullement limitatif de l'invention. Elles montrent :
Figure 1 : une représentation schématique d'un véhicule hybride mettant en oeuvre le procédé selon l'invention ;
Figure 2 : une représentation fonctionnelle du module mettant en oeuvre le procédé selon l'invention ;
Figures 3a-3c : des représentations graphiques de l'évolution du couple appliqué sur le train avant du véhicule de la Figure 1 en fonction de la vitesse, de l'accélération latérale et de l'état de charge de la batterie.

Les éléments identiques conservent les mêmes références d'une Figure à l'autre.

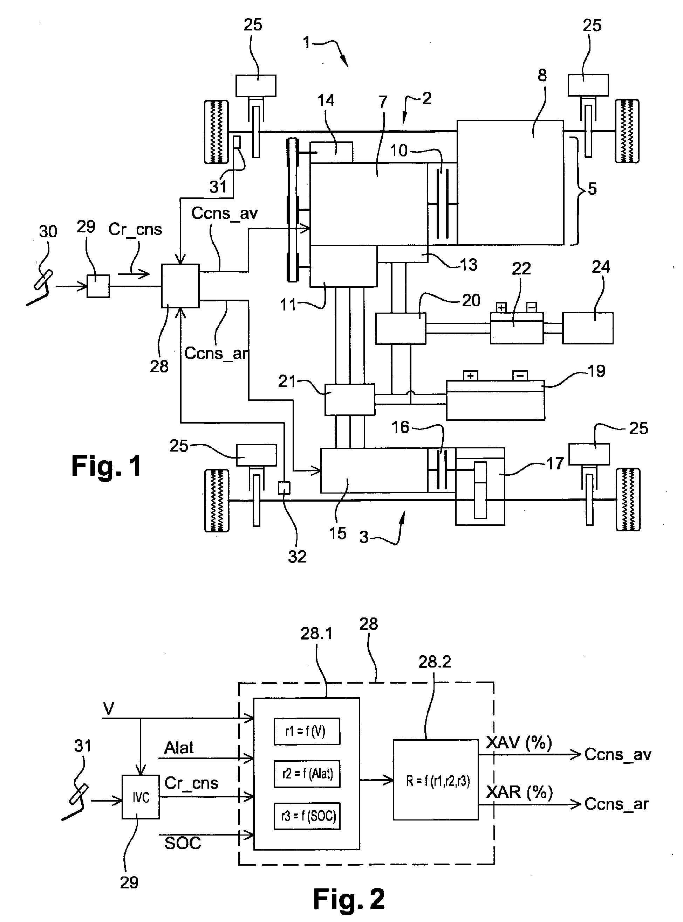

La Figure 1 montre un véhicule 1 hybride mettant en oeuvre le procédé selon l'invention comportant un train avant 2 et un train arrière 3 indépendants mécaniquement l'un de l'autre.

Un groupe moto-propulseur 5 classique assure la traction du train avant 2 du véhicule. Plus précisément, ce groupe 5 comporte un moteur 7 thermique en relation avec une boîte 8 de vitesses manuelle pilotée (BVMP) par l'intermédiaire d'un embrayage 10 classique par exemple un embrayage à garniture sec ou humide. Cette boîte 8 de vitesses est reliée au train avant 2 par l'intermédiaire d'une descente de pont (non représentée). En variante, le groupe 5 moto-propulseur pourrait comporter une boîte 8 de vitesses automatique.

Par ailleurs, une machine 11 électrique est associée mécaniquement au moteur 7 thermique. Cette machine 11 assure la recharge des batteries du véhicule, le démarrage du moteur 7 et s'il y a lieu la traction du train avant 2 en fournissant du couple (mode boost).

Un starter 13 est utilisé pour démarrer le moteur 7 en cas de températures très basses dans le cas où la machine avant 11 n'est pas capable d'assurer cette fonction. Si besoin, un système 14 de climatisation est relié mécaniquement au moteur 7 et à la machine avant 11.

En outre, une machine 15 électrique assure la traction du train arrière 3 du véhicule. A cet effet, la machine 15 est reliée au train arrière 3 par l'intermédiaire d'un embrayage 16 et d'un ensemble 17 de démultiplication. Cet embrayage 16 prend par exemple la forme d'un crabot, tandis que l'ensemble 17 de démultiplication est à rapport unique, même s'il pourrait en variante présenter plusieurs rapports.

Les deux machines 11 et 15 sont reliées entre elles par l'intermédiaire d'un réseau électrique. Plus précisément, les machines 11 et 15 sont reliées à une batterie 19 haute tension par l'intermédiaire d'un onduleur 21 capable de hacher la tension continue de la batterie 19 pour alimenter les machines 11 et 15 électriques lorsque ces dernières fonctionnent en mode moteur. Lorsque ces machines électriques 11 et 15 fonctionnent en mode générateur pour recharger la batterie 19, l'onduleur 21 est capable de transformer la tension alternative produite par les machines 11 et 15 en tension continue appliquée sur les bornes de la batterie 19.

La batterie 19 est connectée à un convertisseur 20 continu/continu qui transforme la tension continue haute tension de la batterie 19 en une tension acceptable par le starter 13 et par une batterie 22 basse tension connectée au réseau 24 de bord du véhicule.

De préférence, le véhicule 1 est équipé d'un système 25 de régulation de freinage classique de type ESP ou ABS permettant de gérer les efforts de freinage en cas de freinage d'urgence, afin d'assurer le contrôle de la trajectoire du véhicule et/ou d'éviter le blocage des roues.

Un calculateur 28 commande les différents organes du véhicule pour effectuer notamment la répartition R du couple Cr_cns demandé par le conducteur entre le train avant 2 (couple Ccns_av) et le train arrière 3 (couple Ccns_ar). Le couple demandé Cr_cns par le conducteur est calculé, par le module 29 dit module d'interprétation de la volonté du conducteur (IVC), notamment en fonction de l'enfoncement de la pédale 30 d'accélérateur et de la vitesse du véhicule 1.

Plus précisément, comme montré sur la Figure 2, le calculateur 28 détermine la répartition R en fonction de la vitesse V du véhicule mesurée par un capteur 31 de vitesse associé à une des roues du véhicule, de l'accélération Alat latérale mesurée par un capteur 32 d'accélération de type tricapteur ou capteur gyroscopique et à l'état SOC de charge de la batterie 19 envoyé par la batterie 19 vers le calculateur 28.

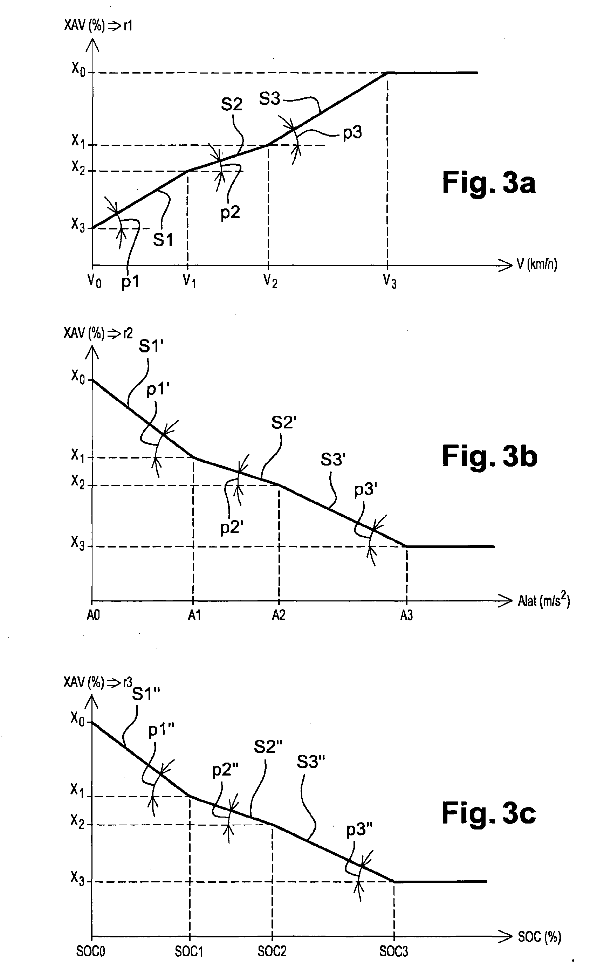

A cet effet, le calculateur 28 calcule à l'aide d'un module 28.1 une première r1, une deuxième r2 et une troisième r3 répartitions de couple à partir de cartographies montrée sur les Figures 3a-3c. Ces cartographies établissent une correspondance entre le pourcentage XAV du couple Cr_cns appliqué sur le train avant 2 et le paramètre concerné (Vitesse V, Accélération latérale Alat ou état de charge SOC de la batterie 19). On note que le pourcentage XAR du couple demandé Cr_cns appliqué sur le train arrière 3 est égal à 100% moins le pourcentage XAV du couple Cr_cns appliqué sur le train avant 2.

La cartographie de la Figure 3a montre que plus la vitesse V du véhicule augmente, plus la portion XAV du couple Cr_cns appliqué sur le train avant 2 augmente. Cela permet de limiter la puissance prélevée à la batterie 19 lorsque le véhicule 1 roule à vitesse élevée. On remarque que cette cartographie est formée de préférence par plusieurs segments S1, S2, S3 dont les pentes p1, p2, p3 (correspondant au rapport entre la variation de XAV et la variation de la vitesse V) varient suivant la plage de vitesses considérée (V0, V1), (V1, V2), (V2, V3). Dans un exemple, les pourcentages [X0=100%; X1=95%; X2=90%; X3=80%] correspondent respectivement aux vitesses [V0=0km/h ; V1=10km/h ; V2=30km/h ; V3=40km/h]. Les pentes p1, p2, p3 sont de préférence suffisamment faibles pour ne pas perturber la régulation de freinage lorsque le système 25 est activé. A cet effet, dans un exemple les pentes p1, p2, p3 sont inférieures à 1 % / (km/h).

La cartographie de la Figure 3b montre que plus l'accélération Alat du véhicule augmente, plus la portion XAV du couple Cr_cns appliqué sur le train avant 2 diminue. Cela permet d'améliorer le ressenti en virage. On remarque que cette cartographie est formée de préférence par plusieurs segments S1', S2', S3' dont les pentes p1', p2', p3' (correspondant au rapport entre la variation de XAV et la variation de l'accélération Alat) varient suivant la plage d'accélérations (A0, A1), (A1, A2), (A2, A3) considérée. Dans un exemple, les pourcentages [X0=100%; X1=95%; X2=90%; X3=90%] correspondent respectivement aux accélérations latérales [A0=0 m/s² ; A1=0.5m/s² ; A2=1 m/s² ; A3=2 m/s²]. Ces pentes p1', p2', p3' sont de préférence suffisamment faibles pour ne pas perturber la régulation de freinage lorsque le système 25 est activé. A cet effet, dans un exemple les pentes p1', p2', p3' sont inférieures à 10% / (m/s²).

La cartographie de la Figure 3c montre que plus le niveau de charge SOC de la batterie 19 augmente, plus la portion XAV du couple appliqué sur le train avant 2 diminue. Inversement plus le niveau de charge SOC est faible, plus XAV augmente. Cela permet de préserver l'énergie de la batterie 19 lorsque son niveau de charge SOC est bas. On remarque que cette cartographie est formée de préférence par plusieurs segments S1 ", S2", S3" dont les pentes p1 ", p2", p3" (correspondant au rapport entre la variation de XAV et la variation du niveau de charge SOC) varient suivant la plage de niveaux de charge (SOC0, SOC1), (SOC1, SOC2), (SOC2, SOC3) considérée. Dans un exemple, les pourcentages [X0=100%; X1=95%; X2=90%; X3=80%] correspondent respectivement aux états de charge [SOCO=0% ; SOC1=40% ; SOC2=60% ; SOC3=100%]. Ces pentes p1 ", p2", p3" sont de préférence suffisamment faibles pour ne pas perturber la régulation de freinage lorsque le système 25 est activé. A cet effet, dans un exemple les pentes p1 ", p2", p3" sont inférieures à 0.5 % / %.

Le calculateur 28 détermine ensuite la répartition R à appliquer sur le train avant 2 et arrière 3 en pondérant, à l'aide d'un module 28.2, les répartitions r1, r2 et r3 calculées précédemment. Cette pondération dépend du mode de conduite choisi par le conducteur et/ou de la situation de vie du véhicule. Ainsi, dans un mode d'économie d'énergie, on conférera un poids plus important aux répartitions r1 et r3. A l'inverse, dans un mode de conduite sportif, on conférera un poids plus important à la répartition r2. Dans certains cas, il sera possible de conférer un poids nul à au moins une répartition, de sorte que la répartition R sera calculée uniquement à partir de 1 ou 2 répartitions rᵢ.

## Revendications

1. Procédé de répartition de couple entre le train avant (2) et le train arrière (3) d'un véhicule hybride (1) comprenant :
- un moteur (7) thermique destiné à assurer la traction d'un des trains du véhicule,
- une machine (15) électrique destinée à assurer la traction de l'autre train du véhicule, cette machine (15) électrique étant en relation avec une batterie (19) haute tension,
**caractérisé en ce que**
- on calcule une répartition (R) du couple demandé (Cr_cns) par le conducteur entre le train avant (Ccns_av) et le train arrière (Ccns_ar) en fonction de la vitesse (V) du véhicule, de l'accélération latérale (Alat) du véhicule et du niveau de charge (SOC) de la batterie (19) haute tension et **en ce que** pour calculer la répartition (R), il comporte les étapes suivantes :
- calculer (28.1) une première répartition (r1) du couple demandé (Cr cns) entre le train avant (2) et le train arrière (3) en fonction de la vitesse (V) du véhicule,
- calculer (28.1) une deuxième répartition (r2) du couple demandé (Cr cns) entre le train avant (2) et le train arrière (3) en fonction de l'accélération latérale (Alat) du véhicule,
- calculer (28.1) une troisième répartition (r3) du couple demandé (Cr cns) entre le train avant (2) et le train arrière (3) en fonction de l'état de charge (SOC) de la batterie (19), et
- pondérer (28.2) les répartitions (r1, r2, r3) calculées pour déterminer la répartition (R) du couple demandé (Cr cns) à appliquer entre le train avant (2) et le train arrière (3).

2. Procédé selon la revendication 1, **caractérisé en ce que** la première répartition (r1) est calculée à partir d'une cartographie dans laquelle plus la vitesse (V) du véhicule augmente plus la portion (XAV) du couple demandé (Cr_cns) appliqué sur le train (2) associé au moteur (7) thermique augmente.

3. Procédé selon la revendication 2, **caractérisé en ce que** la cartographie est formée par des segments (S1-S3) ayant des pentes (p1-p3) variant en fonction de la plage de vitesses ((V0, V1), (V1, V2), (V2, V3)) considérée.

4. Procédé selon l'une des revendications 1 à 3, **caractérisé en ce que** la deuxième répartition (r2) de couple est calculée à partir d'une cartographie dans laquelle plus l'accélération latérale (Alat) augmente plus la portion (XAV) du couple demandé (Cr_cns) appliqué sur le train (2) associé au moteur (7) thermique diminue.

5. Procédé selon la revendication 4, **caractérisé en ce que** la cartographie est formée par des segments (S1'-S3') ayant des pentes (p1'-p3') variant en fonction de la plage d'accélération latérale ((A0, A1), (A1, A2), (A2, A3)) considérée.

6. Procédé selon l'une des revendications 1 à 5, **caractérisé en ce que** la troisième répartition (r3) de couple est calculée à partir d'une cartographie dans laquelle plus le niveau de charge (SOC) de la batterie (19) augmente plus la portion (XAV) du couple demandé (Cr_cns) appliqué sur le train (2) associé au moteur (7) thermique augmente.

7. Procédé selon la revendication 6, **caractérisé en ce que** la cartographie est formée par des segments (S1 "-S3") ayant des pentes (p1"-p3") variant en fonction de la plage de niveau de charge ((SOC0, SOC1), (SOC1, SOC2), (SOC2, SOC3)) considérée.

8. Procédé selon l'une des revendications 1 à 7, **caractérisé en ce que** la fonction de pondération (28.2) est adaptée en fonction du mode de conduite choisi par le conducteur et/ou la situation de vie du véhicule.

9. Procédé selon les revendications 3, 5 et 7, **caractérisé en ce que** les pentes sont suffisamment faibles pour ne pas perturber la régulation de freinage lorsqu'un système (25) de régulation de freinage est activé.

## Patentansprüche

1. Verfahren zum Verteilen des Drehmoments auf den Frontteil (2) und den Heckteil (3) eines Hybridfahrzeugs (1), das Folgendes aufweist:
- einen Verbrennungsmotor (7), der dazu bestimmt ist, den Zug eines der Teile des Fahrzeugs sicherzustellen,
- einen Elektromotor (15), der dazu bestimmt ist, den Zug des anderen Teils des Fahrzeugs sicherzustellen, wobei dieser Elektromotor (15) mit einer Hochspannungsbatterie (19) in Beziehung ist,
**dadurch gekennzeichnet, dass**
- man eine Verteilung (R) des von dem Fahrer verlangten Drehmoments (Cr_cns) auf den Frontteil (Ccns_av) und den Heckteil (Ccns_ar) in Abhängigkeit von der Geschwindigkeit (V) des Fahrzeugs, der seitlichen Beschleunigung (Alat) des Fahrzeugs und dem Ladezustand (SOC) der Hochspannungsbatterie (19) berechnet, und dass es zum Berechnen der Verteilung (R) die folgenden Schritte aufweist:
- Berechnen (28.1) einer ersten Verteilung (r1) des verlangten Drehmoments (Cr_cns) auf den Frontteil (2) und den Heckteil (3) in Abhängigkeit von der Geschwindigkeit (V) des Fahrzeugs,
- Berechnen (28.1) einer zweiten Verteilung (r2) des verlangten Drehmoments (Cr_cns) auf den Frontteil (2) und den Heckteil (3) in Abhängigkeit von der seitlichen Beschleunigung (Alat) des Fahrzeugs,
- Berechnen (28.1) einer dritten Verteilung (r3) des verlangten Drehmoments (Cr_cns) auf den Frontteil (2) und den Heckteil (3) in Abhängigkeit von dem Ladezustand (SOC) der Batterie (19) und
- Gewichten (28.2) der berechneten Verteilungen (r1, r2, r3), um die Verteilung (R) des verlangten Drehmoments (Cr_cns), das an den Frontteil (2) und den Heckteil (3) anzulegen ist, zu bestimmen.

2. Verfahren nach Anspruch 1, **dadurch gekennzeichnet, dass** die erste Verteilung (r1) ausgehend von einer Kartographie berechnet wird, in der der Anteil (XAV) des verlangten Drehmoments (Cr_cns), der an den Frontteil (2), der mit dem Verbrennungsmotor (7) verbunden ist, angelegt wird, umso mehr zunimmt als die Geschwindigkeit (V) des Fahrzeugs zunimmt.

3. Verfahren nach Anspruch 2, **dadurch gekennzeichnet, dass** die Kartographie aus Segmenten (S1-S3) gebildet ist, die Gefälle (p1-p3) haben, die in Abhängigkeit von dem betreffenden Geschwindigkeitsbereich ((V0, V1), (V1, V2), (V2, V3)) variieren.

4. Verfahren nach einem der Ansprüche 1 bis 3, **dadurch gekennzeichnet, dass** die zweite Drehmomentverteilung (r2) ausgehend von einer Kartographie berechnet wird, in der der Anteil (XAV) des verlangten Drehmoments (Cr_cns), der an den Frontteil (2) angelegt wird, der zu dem Verbrennungsmotor (7) gehört, abnimmt, je mehr die seitliche Beschleunigung (Alat) zunimmt.

5. Verfahren nach Anspruch 4, **dadurch gekennzeichnet, dass** die Kartographie aus Segmenten (S1'-S3') gebildet ist, die Gefälle (p1'-p3') haben, die in Abhängigkeit von dem betreffenden seitlichen Beschleunigungsbereich ((A0, A1), (A1, A2), (A2, A3)) variieren.

6. Verfahren nach einem der Ansprüche 1 bis 5, **dadurch gekennzeichnet, dass** die dritte Drehmomentverteilung (r3) ausgehend von einer Kartographie berechnet wird, in der der Anteil (XAV) des verlangten Drehmoments (Cr_cns), der an den Frontteil (2), der mit dem Verbrennungsmotor (7) verbunden ist, angelegt wird, zunimmt, je mehr der Ladezustand (SOC) der Batterie (19) zunimmt.

7. Verfahren nach Anspruch 6, **dadurch gekennzeichnet, dass** die Kartographie aus Segmenten (S1"-S3") gebildet ist, die Gefälle (p1"-p3") haben, die in Abhängigkeit von dem betreffenden Ladezustand ((SOCO, SOC1), (SOC1, SOC2), (SOC2, SOC3)) variieren.

8. Verfahren nach einem der Ansprüche 1 bis 7, **dadurch gekennzeichnet, dass** die Gewichtungsfunktion (28.2) in Abhängigkeit von dem Fahrmodus angepasst wird, der von dem Fahrer ausgewählt wird, und/oder von der Lebenssituation des Fahrzeugs.

9. Verfahren nach den Ansprüchen 3, 5 und 7, **dadurch gekennzeichnet, dass** die Gefälle ausreichend gering sind, um die Bremsregelung nicht zu stören, wenn ein Bremsregelungssystem (25) aktiviert ist.

## Claims

1. A torque distribution method between the front end (2) and the rear end (3) of a hybrid vehicle (1) including:
- a heat engine (7) intended to carry out the traction of one of the ends of the vehicle,
- an electric machine (15) intended to carry out the traction of the other end of the vehicle, this electric machine (15) being connected with a high voltage battery (19)
**characterized in that**
- a distribution (R) is calculated of the torque (Cr_cns) requested by the driver between the front end (Ccns-av) and the rear end (Ccns-ar) as a function of the speed (V) of the vehicle, of the lateral acceleration (Alat) of the vehicle and of the charge level (SOC) of the high voltage battery (19) and **in that** to calculate the distribution (R), it comprises the following steps:
- calculate (28.1) a first distribution (r1) of the requested torque (Cr_cns) between the front end (2) and the rear end (3) as a function of the speed (V) of the vehicle,
- calculate (28.1) a second distribution (r2) of the requested torque (Cr_cns) between the front end (2) and the rear end (3) as a function of the lateral acceleration (Alat) of the vehicle,
- calculate (28.1) a third distribution (r3) of the requested torque (Cr_cns) between the front end (2) and the rear end (3) as a function of the state of charge (SOC) of the battery (19), and
- weight (28.2) the calculated distributions (r1, r2, r3) to determine the distribution (R) of the requested torque (Cr_cns) to be applied between the front end (2) and the rear end (3).

2. The method according to Claim 1, **characterized in that** the first distribution (r1) is calculated from a mapping in which the more the speed (V) of the vehicle increases, the more the portion (XAV) of the requested torque (Cr_cns) applied on the end (2) associated with the heat engine (7) increases.

3. The method according to Claim 2, **characterized in that** the mapping is formed by segments (S1-S3) having gradients (p1-p3) varying as a function of the range of speeds ((V0, V1), (V1, V2), (V2, V3)) concerned.

4. The method according to one of Claims 1 to 3, **characterized in that** the second torque distribution (r2) is calculated from a mapping in which the more the lateral acceleration (Alat) increases, the more the portion (XAV) of the requested torque (Cr_cns) applied on the end (2) associated with the heat engine (7) decreases.

5. The method according to Claim 4, **characterized in that** the mapping is formed by segments (S1'-S3') having gradients (p1'-p3') varying as a function of the range of lateral acceleration ((A0, A1), (A1, A2), (A2, A3)) concerned.

6. The method according to one of Claims 1 to 5, **characterized in that** the third torque distribution (r3) is calculated from a mapping in which the more the charge level (SOC) of the battery (19) increases, the more the portion (XAV) of the requested torque (Cr_cns) applied on the end (2) associated with the heat engine (7) increases.

7. The method according to Claim 6, **characterized in that** the mapping is formed by segments (S1"-S3") having gradients (p1"-p3") varying as a function of the range of charge level ((SOCO, SOC1), (SOC1, SOC2), (SOC2, SOC3)) concerned.

8. The method according to one of Claims 1 to 7, **characterized in that** the weighting function (28.2) is adapted as a function of the driving mode selected by the driver and/or the actual circumstances of the vehicle.

9. The method according to Claims 3, 5 and 7, **characterized in that** the gradients are sufficiently small so as not to impede the braking control when a braking control system (25) is activated.
